(19) Europäisches Patentamt
European Patent Office
Office européen des brevets

(11) **EP 4 645 637 A1**

(12) **EUROPEAN PATENT APPLICATION**
published in accordance with Art. 153(4) EPC

(43) Date of publication:
**05.11.2025 Bulletin 2025/45**

(21) Application number: **24791762.8**

(22) Date of filing: **07.03.2024**

(51) International Patent Classification (IPC):
**H02J 7/00** $^{(2006.01)}$

(52) Cooperative Patent Classification (CPC):
**H01M 10/44; H02J 7/00;** Y02E 60/10

(86) International application number:
**PCT/CN2024/080466**

(87) International publication number:
**WO 2024/217174 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2023 CN 202310454931**

(71) Applicant: **ZTE CORPORATION
Shenzhen, Guangdong 518057 (CN)**

(72) Inventors:
• **KOU, Weiping
  Shenzhen, Guangdong 518057 (CN)**
• **XIAO, Jianhua
  Shenzhen, Guangdong 518057 (CN)**

(74) Representative: **Canzler & Bergmeier
Patentanwälte
Partnerschaft mbB
Despag-Straße 6
85055 Ingolstadt (DE)**

(54) **CHARGING METHOD, ELECTRONIC DEVICE AND COMPUTER-READABLE MEDIUM**

(57) The present application provides a charging method, an electronic device and a computer-readable medium. The charging method comprises: sending a first message to a charger, the first message comprising a first basic charging parameter and a second basic charging parameter, the first basic charging parameter being determined according to a first operating charging parameter requested by a terminal, the second basic charging parameter being determined according to a second operating charging parameter requested by the terminal, and a maximum value of the first operating charging parameter being greater than a first preset threshold value, and/or a maximum value of the second operating charging parameter being greater than a second preset threshold value; and performing charging at the first operating charging parameter and the second operating charging parameter until a full charge capacity is reached.

200

send a first message to a charger; the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold

201

perform charging based on the first operating charging parameter and the second operating charging parameter until the terminal is fully charged

FIG. 2

EP 4 645 637 A1

**Description**

CROSS REFERENCE TO RELATED APPLICATIONS

The present disclosure claims the priority to Chinese Patent Application No. 202310454931.8 filed with the CNIPA on April 18, 2023, the contents of which are incorporated herein by reference in their entirety.

TECHNICAL FIELD

The embodiments of the present disclosure relate to, but are not limited to, the field of charging technology.

BACKGROUND

In order to meet the users' demand for fast charging and gain competitive advantages for products, all mobile phone manufacturers make every effort to increase the charging power of mobile phones. In order to meet the increasing demand for fast charging, the Universal Serial Bus Implementers Forum (USB-IF) issue the latest USB Power Delivery (USB PD) 3.1 fast charging standard protocol, which allows for super-fast charging up to 240 W (48 V/5 A), but for terminal products such as mobile phones and PADs, the ultra-high voltage charging of 48 V can be hardly realized because battery voltages of those terminal products are merely about 4.45 V. All the mobile phones adopting the USB PD 3.1 fast charging protocol are generally charged under the condition that a charging voltage is about 11 V, a maximum charging current is 5 A, and a maximum charging power is 55 W (11 V/5 A). Some mobile phone manufacturers adopt a solution of dual-cell series connection to enable the battery voltages to be around 9 V, but the charging power can merely reach about 100 W (20 V/5 A) due to the limitation of the charging current.

SUMMARY

The embodiments of the present disclosure provide a charging method, an electronic device, and a computer-readable medium.

In a first aspect, an embodiment of the present disclosure provides a charging method, including: sending a first message to a charger; wherein the first message includes a first basic charging parameter and a second basic charging parameter, and the first basic charging parameter is determined based on a first operating charging parameter requested by a terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold; and performing charging based on the first operating charging parameter and the second operating charging parameter until the terminal is fully charged.

In a second aspect, an embodiment of the present disclosure provides a charging method, including: receiving a first message sent by a terminal; wherein the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold; and adjusting a power supply capability based on the first basic charging parameter and the second basic charging parameter.

In a third aspect, an embodiment of the present disclosure provides an electronic device, including: at least one processor; and a storage device having stored thereon at least one program which, when executed by the at least one processor, implements any of the charging methods described in the present disclosure.

In a fourth aspect, an embodiment of the present disclosure provides a computer-readable medium having stored thereon a computer program which, when executed by a processor, implements any of the charging methods described in the present disclosure.

BRIEF DESCRIPTION OF DRAWINGS

FIG. 1 is a schematic diagram of a hardware structure according to an embodiment of the present disclosure;
FIG. 2 is a flowchart illustrating a charging method according to an embodiment of the present disclosure;
FIG. 3 is a flowchart illustrating a charging method according to another embodiment of the present disclosure;
FIG. 4 is a flowchart illustrating a charging method according to a first example of an embodiment of the present disclosure;
FIG. 5 is a block diagram of an electronic device according to another embodiment of the present disclosure; and
FIG. 6 is a block diagram of a charging system according to another embodiment of the present disclosure.

DETAIL DESCRIPTION OF EMBODIMENTS

In order to enable those of ordinary skill in the art to better understand the technical solutions of the present disclosure, a charging method, an electronic device, and a computer-readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

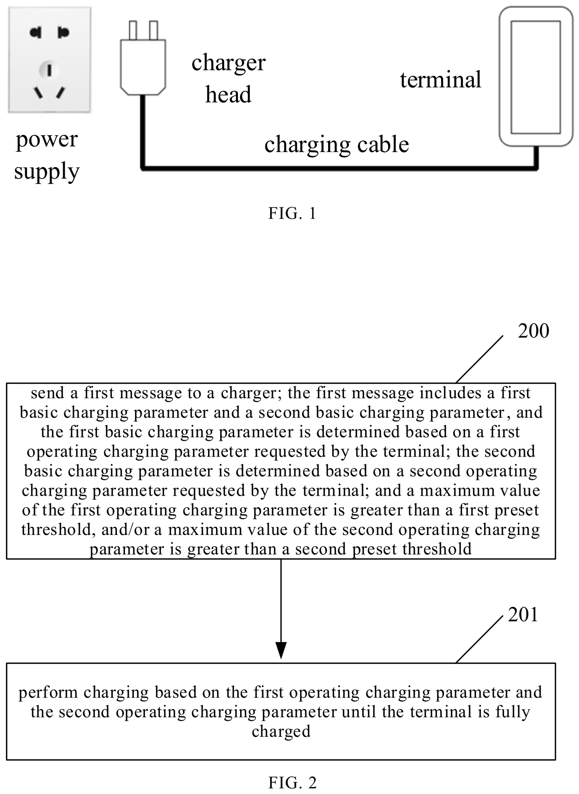

FIG. 1 is a schematic diagram of a hardware structure according to an embodiment of the present disclosure. As shown in FIG. 1, the charging method according to the embodiments of the present disclosure relates to a charger and a terminal, the charger includes a charger head and a charging cable, the charging cable is capable of being connected to the terminal and the charger head, and the charger head is capable of being connected to a power supply.

By connecting the charger head to the power supply and connecting the charging cable to the terminal and the charger head, the charging method provided in the embodiments of the present disclosure can be implemented.

FIG. 2 is a flowchart illustrating a charging method according to an embodiment of the present disclosure.

In a first aspect, referring to FIG. 2, an embodiment of the present disclosure provides a charging method applicable to a terminal, and the method may include operations 200 and 201.

At operation 200, a first message is sent to a charger; the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold.

In some exemplary embodiments, the first preset threshold may be a maximum value of the first operating charging parameter in a fast charging standard protocol.

In some exemplary embodiments, the first basic charging parameter is a ratio of the first operating charging parameter to a product of a first charging parameter base and a first-charging-parameter-base extended value.

In some exemplary embodiments, the second basic charging parameter may be determined with a method in the standard protocol.

In some exemplary embodiments, the second preset threshold may be a maximum value of the second operating charging parameter in the fast charging standard protocol.

In some exemplary embodiments, the second basic charging parameter is a ratio of the second operating charging parameter to a product of a second charging parameter base and a second-charging-parameter-base extended value.

In some exemplary embodiments, the first basic charging parameter is a basic charging voltage, the first operating charging parameter is an operating charging voltage, the second basic charging parameter is a basic charging current, and the second operating charging parameter is an operating charging current; or, the first basic charging parameter is the basic charging current, the first operating charging parameter is the operating charging current, the second basic charging parameter is the basic charging voltage, and the second operating charging parameter is the operating charging voltage.

That is, the first message includes at least one of the basic charging voltage or the basic charging current.

In some exemplary embodiments, the first charging parameter base is a charging voltage base, and the second charging parameter base is a charging current base; or, the first charging parameter base is the charging current base, and the second charging parameter base is the charging voltage base.

In some exemplary embodiments, the first-charging-parameter-base extended value is a charging-voltage-base (or, voltage-base) extended value, and the second-charging-parameter-base extended value is a charging-current-base (or, current-base) extended value; or, the first-charging-parameter-base extended value is the charging-current-base extended value, and the second-charging-parameter-base extended value is the charging-voltage-base extended value.

In some exemplary embodiments, the basic charging voltage $V_1$ is a ratio of the operating charging voltage V requested by the terminal to a product of the charging voltage base $V_{base}$ and a first-charging-voltage-base extended value $k_{V1}$.

In some exemplary embodiments, the basic charging current $I_1$ is a ratio of the operating charging current I requested by the terminal to a product of the charging current base $I_{base}$ and the first-charging-current-base extended value $k_{I1}$.

In some exemplary embodiments, the first message may be a Vendor Defined Message (VDM).

In the embodiments of the present disclosure, values of the voltages and/or currents may be indicated in a field of a message, that is, indicated by a field value of the field. Therefore, the message including a voltage and/or a current may refer to the field value of the field in the message indicating the voltage and/or the current.

In some exemplary embodiments,

$$V_1 = \frac{V}{k_{v1} \times V_{base}}$$ . The charging voltage base in an extended standard protocol is extended from $V_{base}$ to $k_{V1} \times V_{base}$ herein.

In some exemplary embodiments,

$$I_1 = \frac{I}{k_{I1} \times I_{base}}$$ . The charging current base in the extended standard protocol is extended from $I_{base}$ to $k_{I1} \times I_{base}$ herein.

In some exemplary embodiments, $k_{V1}$ is generally greater than 1, and $k_{V1}$ may be set to be greater than 0 and less than or equal to 1 for being compatible with the fast charging standard protocol.

In some exemplary embodiments, $k_{I1}$ is generally greater than 1, and $k_{I1}$ may be set to be greater than 0 and less than or equal to 1 for being compatible with the fast charging standard protocol.

In some exemplary embodiments, the number of bytes for the basic charging voltage $V_1$ and the number of bytes for the basic charging current $I_1$ are fixed in the fast charging standard protocol, for example, the number of bytes for the basic charging voltage is 11 and the number of bytes for the basic charging current is 7 in the Programmable Power Supply (PPS) protocol. Therefore, a maximum basic charging voltage capable of being represented and a maximum basic charging current capable of being represented are limited.

At operation 201, charging is performed based on the first operating charging parameter and the second operating charging parameter until the terminal is fully charged.

In some exemplary embodiments, before sending the first message to the charger, the method further includes: detecting whether the charger and the terminal support the fast charging standard protocol and a fast charging extended protocol; and in a case where both the charger and the terminal support the fast charging standard protocol and the fast charging extended protocol, performing the operation of sending the first message to the charger.

In some exemplary embodiments, detecting whether the charger and the terminal support the fast charging standard protocol and the fast charging extended protocol includes: detecting whether both the charger and the terminal support the fast charging standard protocol, detecting whether both the charger and the terminal support the fast charging extended protocol in a case where both the charger and the terminal support the fast charging standard protocol, and determining that both the charger and the terminal support the fast charging standard protocol and the fast charging extended protocol in a case where both the charger and the terminal support the fast charging extended protocol.

In some example embodiments, the fast charging standard protocol may be a USB PD standard protocol, such as the USB PD 3.1 standard protocol.

In some example embodiments, the fast charging extended protocol may be a USB PD extended protocol, such as a USB PD 3.1 extended protocol.

In some exemplary embodiments, detecting whether the charger and the terminal support the fast charging standard protocol includes: in a case where the terminal supports the fast charging standard protocol, sending information indicating that the terminal supports the fast charging standard protocol to the charger; in a case where information which is sent by the charger and indicates that the charger supports the fast charging standard protocol is received, determining that both the charger and the terminal support the fast charging standard protocol; and in a case where information which is sent by the charger and indicates that the charger does not support the fast charging standard protocol is received, determining that the terminal supports the fast charging standard protocol and the charger does not support the fast charging standard protocol.

In some exemplary embodiments, detecting whether the charger and the terminal support the fast charging standard protocol includes: in a case where the terminal does not support the fast charging standard protocol, sending information indicating that the terminal does not support the fast charging standard protocol to the charger; in a case where information which is sent by the charger and indicates that the charger supports the fast charging standard protocol is received, determining that the terminal does not support the fast charging standard protocol and the charger supports the fast charging standard protocol; and in a case where information which is sent by the charger and indicates that the charger does not support the fast charging standard protocol is received, determining that neither the terminal nor the charger supports the fast charging standard protocol.

In some exemplary embodiments, detecting whether the charger and the terminal support the fast charging standard protocol includes: in a case where information which is sent by the charger and indicates that the charger supports the fast charging standard protocol is received and the terminal supports the fast charging standard protocol, sending information indicating that the terminal supports the fast charging standard protocol to the charger, and determining that both the charger and the terminal support the fast charging standard protocol; in a case where the information which is sent by the charger and indicates that the charger supports the fast charging standard protocol is received and the terminal does not support the fast charging standard protocol, sending information indicating that the terminal does not support the fast charging standard protocol to the charger, and determining that the charger supports the fast charging standard protocol and the terminal does not support the fast charging standard protocol; in a case where information which is sent by the charger and indicates that the charger does not support the fast charging standard protocol is received and the terminal supports the fast charging standard protocol, sending the information indicating that the terminal supports the fast charging standard protocol to the charger, determining that the charger does not support the fast charging standard protocol and the terminal supports the fast charging standard protocol; and in a case where the information which is sent by the charger and indicates that the charger does not support the fast charging standard protocol is received and the terminal does not support the fast charging standard protocol, sending the information indicating that the terminal does not support the fast charging standard protocol to the charger, and determining that neither the charger nor the terminal supports the fast charging standard protocol.

In some exemplary embodiments, detecting whether the charger and the terminal support the fast charging extended protocol includes: in a case where the terminal supports the fast charging extended protocol, sending information indicating that the terminal supports the fast charging extended protocol to the charger; in a case where information which is sent by the charger and indicates that the charger supports the fast charging extended protocol is received, determining that both the charger and the terminal support the fast charging extended protocol; and in a case where information which is sent by the charger and indicates that the charger does not support the fast charging extended protocol is received, determining that the terminal supports the fast charging extended protocol and the charger does not support the fast charging extended protocol.

In some exemplary embodiments, detecting whether the charger and the terminal support the fast charging extended protocol includes: in a case where the terminal does not support the fast charging extended protocol, sending information indicating that the terminal does not support the fast charging extended protocol to the charger; in a case where information which is sent by the charger and indicates that the charger supports the fast charging extended protocol is received, determining that the terminal does not support the fast charging extended protocol and the charger supports the fast charging extended protocol; and in a case where information which is sent by the charger and indicates that the charger does not support the fast charging extended protocol is received, determining that neither the terminal nor the charger supports the fast charging extended protocol.

In some exemplary embodiments, detecting whether the charger and the terminal support the fast charging extended protocol includes: in a case where information which is sent by the charger and indicates that the charger supports the fast charging extended protocol is received and the terminal supports the fast charging extended protocol, sending information indicating that the terminal supports the fast charging extended protocol to the charger, and determining that both the charger and the terminal support the fast charging extended protocol; in a case where the information which is sent by the charger and indicates that the charger supports the fast charging extended protocol is received and the terminal does not support the fast charging extended protocol, sending information indicating that the terminal does not support the fast charging extended protocol to the charger, and determining that the charger supports the fast charging extended protocol and the terminal does not support the fast charging extended protocol; in a case where information which is sent by the charger and indicates that the charger does not support the fast charging extended protocol is received and the terminal supports the fast charging extended protocol, sending the information indicating that the terminal supports the fast charging extended protocol to the charger, determining that the charger does not support the fast charging extended protocol and the terminal supports the fast charging extended protocol; and in a case where the information which is sent by the charger and indicates that the charger does not support the fast charging extended protocol is received and the terminal does not support the fast charging extended protocol, sending the information indicating that the terminal does not support the fast charging extended protocol to the charger, and determining that neither the charger nor the terminal supports the fast charging extended protocol.

In some exemplary embodiments, in a case where the charger or the terminal does not support the fast charging standard protocol, the method further includes: performing charging by a common charging process.

In some exemplary embodiments, in a case where both the charger and the terminal support the fast charging standard protocol and the charger or the terminal does not support the fast charging extended protocol, the method further includes: sending a sixth message to the charger, with the sixth message including the first basic charging parameter and the second basic charging parameter, the first basic charging parameter being a ratio of the first operating charging parameter requested by the terminal to the first charging parameter base, and the second basic charging parameter being a ratio of the second operating charging parameter requested by the terminal to the second charging parameter base; and performing charging based on the first operating charging parameter and the second operating charging parameter until the terminal is fully charged.

In some exemplary embodiments, the sixth message includes the basic charging voltage and the basic charging current, the basic charging voltage $V_2$ is a ratio of the operating charging voltage V requested by the terminal to the voltage base $V_{base}$; and the basic charging current $I_2$ is a ratio of the operating charging current I requested by the terminal to the current base $I_{base}$.

In some exemplary embodiments, the sixth message is a VDM.

In some exemplary embodiments,

$$V_2 = \frac{V}{V_{base}}.$$

In some exemplary embodiments, $I_2 = \frac{I}{I_{base}}$.

In some exemplary embodiments, before sending the first message to the charger, the method further includes: receiving a second message sent by the charger; and the second message includes: the first-charging-parameter-base extended value.

In some exemplary embodiments, the second message further includes: the second-charging-parameter-base extended value.

In some exemplary embodiments, the second message includes: the first-voltage-base extended value $k_{V1}$ and/or the first-current-base extended value $k_{I1}$.

In some exemplary embodiments, the second message is a VDM.

In some exemplary embodiments, before receiving the second message sent by the charger, the method further includes: detecting whether the charger and the terminal support the fast charging standard protocol and the fast charging extended protocol; and in a case where both the charger and the terminal support the fast charging standard protocol and the fast charging extended protocol, performing the operation of receiving the second message sent by the charger.

In some exemplary embodiments, after receiving the second message sent by the charger, the method further includes: detecting whether the charger and the terminal support the fast charging standard protocol and the fast charging extended protocol; and in a case where both the charger and the terminal support the fast charging standard protocol and the fast charging extended protocol, performing the operation of sending the first message to the charger.

In some exemplary embodiments, before sending the first message to the charger, the method further includes: receiving a third message sent by the charger, with the third message including a third-charging-parameter-base extended value; determining the first-charging-parameter-base extended value based on the third-charging-parameter-base extended value, with the first-charging-parameter-base extended value being less than or equal to the third-charging-parameter-base extended value; and sending a fourth message to the charger, with the fourth message including the first-charging-parameter-base extended value.

In some exemplary embodiments, the third message further includes: a fourth-charging-parameter-base extended value; the fourth message further includes: the second-charging-parameter-base extended value; and before sending the fourth message to the charger, the method further includes: determining the second-charging-parameter-base extended value based on the fourth-charging-parameter-base extended value, with the second-charging-parameter-base extended value being less than or equal to the fourth-charging-parameter-base extended value.

In some exemplary embodiments, the third message is a VDM.

In some exemplary embodiments, the fourth message is a VDM.

In some embodiments, the third-charging-parameter-base extended value is the charging-voltage-base extended value, and the fourth-charging-parameter-base extended value is the charging-current-base extended value; or, the third-charging-parameter-base extended value is the charging-current-base extended value, and the fourth-charging-parameter-base extended value is the charging-voltage-base extended value.

In some exemplary embodiments, the third message includes: a second-voltage-base extended value $k_{V2}$ and/or a second-current-base extended value $k_{I2}$.

In some exemplary embodiments, the first-voltage-base extended value $k_{V1}$ is determined based on the second-voltage-base extended value $k_{V2}$; and the first-voltage-base extended value $k_{V1}$ is less than or equal to the second-voltage-base extended value $k_{V2}$.

In some exemplary embodiments, the first-current-base extended value $k_{I1}$ is determined based on the second-current-base extended value $k_{I2}$; and the first-current-base extended value $k_{I1}$ is less than or equal to the second-current-base extended value $k_{I2}$.

In some exemplary embodiments, the fourth message includes: the first-voltage-base extended value $k_{V1}$ and/or the first-current-base extended value $k_{I1}$.

In some exemplary embodiments, before receiving the third message sent by the charger, the method further includes: detecting whether both the charger and the terminal support the fast charging standard protocol and the fast charging extended protocol; and in a case where both the charger and the terminal support the fast charging standard protocol and the fast charging extended protocol, performing the operation of receiving the third message sent by the charger.

In some exemplary embodiments, after receiving the third message sent by the charger, the method further includes: detecting whether both the charger and the terminal support the fast charging standard protocol and the fast charging extended protocol; and in a case where both the charger and the terminal support the fast charging standard protocol and the fast charging extended protocol, performing the operation of determining the first-charging-parameter-base extended value based on the third-charging-parameter-base extended value.

In some exemplary embodiments, when the first-charging-parameter-base extended value is determined based on the third-charging-parameter-base extended value, the first-charging-parameter-base extended value may be determined based on actual needs as long as the first-charging-parameter-base extended value is less than or equal to the third-charging-parameter-base extended value.

In some exemplary embodiments, when the first-voltage-base extended value $k_{V1}$ is determined based on the second-voltage-base extended value $k_{V2}$, the first-voltage-base extended value $k_{V1}$ may be determined based on actual needs as long as the first-voltage-base extended value $k_{V1}$ is less than or equal to the second-voltage-base extended value $k_{V2}$.

In some exemplary embodiments, when the second-charging-parameter-base extended value is determined based on the fourth-charging-parameter-base extended value, the second-charging-parameter-base extended value may be determined based on actual needs as long as the second-charging-parameter-base extended value is less than or equal to the fourth-charging-parameter-base extended value.

In some exemplary embodiments, when the first-current-base extended value $k_{I1}$ is determined based on the second-current-base extended value $k_{I2}$, the first-current-base extended value $k_{I1}$ may be determined based on actual needs as long as the first-current-base extended value $k_{I1}$ is less than or equal to the second-current-base extended value $k_{I2}$.

In some exemplary embodiments, before sending the first message to the charger, the method further includes: receiving a fifth message sent by the charger; and the fifth message includes: the product of the first charging parameter base and the first-charging-parameter-base extended value.

In some exemplary embodiments, the fifth message further includes: the product of the second charging parameter base and the second-charging-parameter-base extended value.

In some exemplary embodiments, the fifth message is a VDM.

In some exemplary embodiments, the fifth message includes: a product of a voltage base and a voltage-base extended value and/or a product of a current base and a current-base extended value.

In some exemplary embodiments, before receiving the fifth message sent by the charger, the method further includes: detecting whether both the charger and the terminal support the fast charging standard protocol and the fast charging extended protocol; and in a case where both the charger and the terminal support the fast charging standard protocol and the fast charging extended protocol, performing the operation of receiving the fifth message sent by the charger.

In some exemplary embodiments, after receiving the fifth message sent by the charger, the method further includes: detecting whether both the charger and the terminal support the fast charging standard protocol and the fast charging extended protocol; and in a case where both the charger and the terminal support the fast charging standard protocol and the fast charging extended protocol, performing the operation of sending the first message to the charger.

In the charging method provided in the embodiments of the present disclosure, a value range of a first charging parameter in the fast charging standard protocol is extended, so that a value range of the charging power is extended.

In some exemplary embodiments, a value range of a second charging parameter in the fast charging standard protocol is also extended, so that the value range of the charging power is further extended.

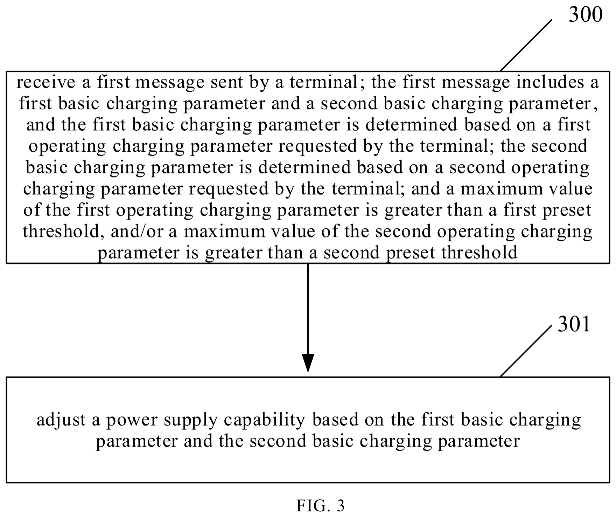

FIG. 3 is a flowchart illustrating a charging method according to another embodiment of the present disclosure.

In a second aspect, referring to FIG. 3, another embodiment of the present disclosure provides a charging method applicable to a charger, and the method may include operations 300 and 301.

At operation 300, a first message sent by a terminal is received; the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold.

In some exemplary embodiments, the first preset threshold may be a maximum value of the first operating charging parameter in a fast charging standard protocol.

In some exemplary embodiments, the first basic charging parameter is a ratio of the first operating charging parameter requested by the terminal to a product of a first charging parameter base and a first-charging-parameter-base extended value.

In some exemplary embodiments, the second basic charging parameter may be determined with a method in the standard protocol.

In some exemplary embodiments, the second preset threshold may be a maximum value of the second operating charging parameter in the fast charging standard protocol.

In some exemplary embodiments, the second basic charging parameter is a ratio of the second operating charging parameter requested by the terminal to a product of a second charging parameter base and a second-charging-parameter-base extended value.

In some exemplary embodiments, the first basic charging parameter is a basic charging voltage, the first operating charging parameter is an operating charging voltage, the second basic charging parameter is a basic charging current, and the second operating charging parameter is an operating charging current; or, the first basic charging parameter is the basic charging current, the first operating charging parameter is the operating charging current, the second basic charging parameter is the basic charging voltage, and the second operating charging parameter is the operating charging voltage.

That is, the first message includes at least one of the basic charging voltage or the basic charging current.

In some exemplary embodiments, the first charging parameter base is a charging voltage base, and the second charging parameter base is a charging current base; or, the first charging parameter base is the charging current base, and the second charging parameter base is the charging voltage base.

In some exemplary embodiments, the first-charging-parameter-base extended value is a charging-voltage-base extended value, and the second-charging-parameter-base extended value is a charging-current-base extended value; or, the first-charging-parameter-base extended value is the charging-current-base extended value, and the second-charging-parameter-base extended value is the charging-voltage-base extended value.

In some exemplary embodiments, the basic charging voltage $V_1$ is a ratio of the operating charging voltage V requested by the terminal to a product of the charging voltage base $V_{base}$ and a first-charging-voltage-base extended value $k_{V1}$.

In some exemplary embodiments, the basic charging current $I_1$ is a ratio of the operating charging current I requested by the terminal to a product of the charging current base $I_{base}$ and the first-charging-current-base extended value $k_{I1}$.

In some exemplary embodiments, the first message may be a VDM.

In some exemplary embodiments,

$$V_1 = \frac{V}{k_{v1} \times V_{base}}$$

. The charging voltage base in an extended standard protocol is extended from $V_{base}$ to $k_{V1} \times V_{base}$ herein.

In some exemplary embodiments,

$$I_1 = \frac{I}{k_{I1} \times I_{base}}$$

. The charging current base in the extended standard protocol is extended from $I_{base}$ to $k_{I1} \times I_{base}$ herein.

In some exemplary embodiments, $k_{V1}$ is generally greater than 1, and $k_{V1}$ may be set to be greater than 0 and less than or equal to 1 for being compatible with the fast charging standard protocol.

In some exemplary embodiments, $k_{I1}$ is generally greater than 1, and $k_{I1}$ may be set to be greater than 0 and less than or equal to 1 for being compatible with the fast charging standard protocol.

In some exemplary embodiments, the number of bytes for the basic charging voltage $V_1$ and the number of bytes for the basic charging current $I_1$ are fixed in the fast charging standard protocol, for example, the number of bytes for the basic charging voltage is 11 and the number of bytes for the basic charging current is 7 in the PPS protocol. Therefore, a maximum basic charging voltage capable of being represented and a maximum basic charging current capable of being represented are limited.

At operation 301, a power supply capability is adjusted based on the first basic charging parameter and the second basic charging parameter.

In some exemplary embodiments, adjusting the power supply capability based on the first basic charging parameter and the second basic charging parameter includes: determining the first operating charging parameter requested by the terminal based on the first basic charging parameter; determining the second operating charging parameter requested by the terminal based on the second basic charging parameter; and adjusting the power supply capability based on the first operating charging parameter requested by the terminal and the second operating charging parameter requested by the terminal.

In some exemplary embodiments, determining the first operating charging parameter requested by the terminal based on the first basic charging parameter includes: determining the first operating charge parameter requested by the terminal to be a product of the first basic charging parameter, the first charging parameter base, and the first-charging-parameter-base extended value.

In some exemplary embodiments, determining the second operating charging parameter requested by the terminal based on the second basic charging parameter includes: determining the second operating charging parameter requested by the terminal to be a product of the second basic charging parameter, the second charging parameter base, and the second-charging-parameter-base extended value.

In some exemplary embodiments, the power supply capability is adjusted based on the basic charging voltage and the basic charging current.

In some exemplary embodiments, adjusting the power supply capability based on the basic charging voltage and the basic charging current includes: determining the operating charging voltage requested by the terminal based on the basic charging voltage; determining the operating charging current requested by the terminal based on the basic charging current; and adjusting the power supply capability based on the operating charging voltage requested by the terminal and the operating charging current requested by the terminal.

In some exemplary embodiments, the operating charging voltage V requested by the terminal is determined by the formula $V = V_1 \times k_{V1} \times V_{base}$.

In some exemplary embodiments, the operating charging current I requested by the terminal is determined by the formula $I = I_1 \times k_{I1} \times I_{base}$.

In some exemplary embodiments, before receiving the first message sent by the terminal, the method further includes: detecting whether the charger and the terminal support the fast charging standard protocol and a fast charging extended protocol; and in a case where both the charger and the terminal support the fast charging standard protocol and the fast charging extended protocol, performing the operation of receiving the first message sent by the terminal.

In some exemplary embodiments, detecting whether the charger and the terminal support the fast charging standard protocol and the fast charging extended protocol includes: detecting whether the charger and the terminal support the fast charging standard protocol, detecting whether both the charger and the terminal support the fast charging extended protocol in a case where both the charger and the terminal support the fast charging standard protocol, and determining that both the charger and the terminal support the fast charging standard protocol and the fast charging extended protocol in a case where both the charger and the terminal support the fast charging extended protocol.

In some example embodiments, the fast charging standard protocol may be a USB PD standard protocol, such as the USB PD 3.1 standard protocol.

In some example embodiments, the fast charging extended protocol may be a USB PD extended protocol, such as the USB PD 3.1 extended protocol.

In some exemplary embodiments, detecting whether the charger and the terminal support the fast charging standard protocol includes: in a case where the charger supports the fast charging standard protocol, sending information indicating that the charger supports the fast charging standard protocol to the terminal; in a case where information which is sent by the terminal and indicates that the terminal supports the fast charging standard protocol is received, determining that both the charger and the terminal support the fast charging standard protocol; and in a case where information which is sent by the terminal and indicates that the terminal does not support the fast charging standard protocol is received, determining that the charger supports the fast charging standard protocol and the terminal does not support the fast charging standard protocol.

In some exemplary embodiments, detecting whether the charger and the terminal support the fast charging standard protocol includes: in a case where the charger does not support the fast charging standard protocol, sending information indicating that the charger does not support the fast charging standard protocol to the terminal; in a case where information which is sent by the terminal and indicates that the terminal supports the fast charging standard protocol is received, determining that the charger does not support the fast charging standard protocol and the terminal supports the fast charging standard protocol; and in a case where information which is sent by the terminal and indicates that the terminal does not support the fast charging standard protocol is received, determining that neither the terminal nor the charger supports the fast charging standard protocol.

In some exemplary embodiments, detecting whether the charger and the terminal support the fast charging standard protocol includes: in a case where information which is sent by the terminal and indicates that the terminal supports the fast charging standard protocol is received and the charger supports the fast charging standard protocol, sending information indicating that the charger supports the fast charging standard protocol to the terminal, and determining that both the charger and the terminal support the fast charging standard protocol; in a case where the information which is sent by the terminal and indicates that the terminal supports the fast charging standard protocol is received and the charger does not support the fast charging standard protocol, sending information indicating that the charger does not support the fast charging standard protocol to the terminal, and determining that the terminal supports the fast charging standard protocol and the charger does not support the fast charging standard protocol; in a case where information which is sent by the terminal and indicates that the terminal does not support the fast charging standard protocol is received and the charger supports the fast charging standard protocol, sending the information indicating that the charger supports the fast charging standard protocol to the terminal, determining that the terminal does not support the fast charging standard protocol and the charger supports the fast charging standard protocol; and in a case where the information which is sent by the terminal and indicates that the terminal does not support the fast charging standard protocol is received and the charger does not support the fast charging standard protocol, sending the information indicating that the charger does not support the fast charging standard protocol to the terminal, and determining that neither the charger nor the terminal supports the fast charging standard protocol.

In some exemplary embodiments, detecting whether the charger and the terminal support the fast charging extended protocol includes: in a case where the charger supports the fast charging extended protocol, sending information indicating that the charger supports the fast charging extended protocol to the terminal; in a case where information which is sent by the terminal and indicates that the terminal supports the fast charging extended protocol is received, determining that both the charger and the terminal support the fast charging extended protocol; and in a case where information which is sent by the terminal and indicates that the terminal does not support the fast charging extended protocol is received, determining that the charger supports the fast charging extended protocol and the terminal does not support the fast charging extended protocol.

In some exemplary embodiments, detecting whether the charger and the terminal support the fast charging extended protocol includes: in a case where the charger does not support the fast charging extended protocol, sending information indicating that the charger does not support the fast charging extended protocol to the terminal; in a case where information which is sent by the terminal and indicates that the terminal supports the fast charging extended protocol is received, determining that the charger does not support the fast charging extended protocol and the terminal supports the fast charging extended protocol; and in a case where information which is sent by the terminal and indicates that the terminal does not support the fast charging extended protocol is received, determining that neither the terminal nor the charger supports the fast charging extended protocol.

In some exemplary embodiments, detecting whether the charger and the terminal support the fast charging extended protocol includes: in a case where information which is sent by the terminal and indicates that the terminal supports the fast charging extended protocol is received and the charger supports the fast charging extended protocol, sending information indicating that the charger supports the fast charging extended protocol to the terminal, and determining that both the charger and the terminal support the fast charging extended protocol; in a case where the information which is sent by the terminal and indicates that the terminal supports the fast charging extended protocol is received and the charger does not support the fast charging extended protocol, sending information indicating that the charger does not support the fast charging extended protocol to the terminal, and determining that the terminal supports the fast charging extended protocol and the charger does not support the fast charging extended protocol; in a case where information which is sent by the terminal and indicates that the terminal does not support the fast charging extended protocol is received and the charger supports the fast charging extended protocol, sending the information indicating that the charger supports the fast charging extended protocol to the terminal, determining that the terminal does not support the fast charging extended protocol and the charger supports the fast charging extended protocol; and in a case where the information which is sent by the terminal and indicates that the terminal does not support the fast charging extended protocol is received and the charger does not support the fast charging extended protocol, sending the information indicating that the charger does not support the fast charging extended protocol to the terminal, and determining that neither the charger nor the terminal supports the fast charging extended protocol.

In some exemplary embodiments, in a case where both the charger and the terminal support the fast charging standard protocol and the charger or the terminal does not support the fast charging extended protocol, the method further includes: receiving a sixth message sent by the terminal; the sixth message includes the first basic charging parameter and the second basic charging parameter, the first basic charging parameter is a ratio of the first operating charging parameter requested by the terminal to the first charging parameter base; and the second basic charging parameter is a ratio of the second operating charging parameter requested by the terminal to the second charging parameter base.

In some exemplary embodiments, the sixth message includes the basic charging voltage and the basic charging current, the basic charging voltage $V_2$ is a ratio of the operating charging voltage $V$ requested by the terminal to the voltage base $V_{base}$; and the basic charging current $I_2$ is a ratio of the operating charging current $I$ requested by the terminal to the current base $I_{base}$.

In some embodiments, the power supply capability is adjusted based on the basic charging voltage and the basic charging current.

In the embodiments of the present disclosure, values of the voltages and/or currents may be indicated in a field of a message, that is, indicated by a field value of the field. Therefore, the message including a voltage and/or a current may refer to the field value of the field in the message indicating the voltage and/or the current.

In some exemplary embodiments, the sixth message is a VDM.

In some exemplary embodiments, in a case where both the charger and the terminal support the fast charging standard protocol and the charger or the terminal does not support the fast charging extended protocol, the method further includes: receiving a sixth VDM sent by the terminal, with the sixth VDM including an operating voltage field and an operating current field, a field value $V_2$ of the operating voltage field being a ratio of a charging voltage requested by the terminal to a voltage base, and a field value $I_2$ of the operating current field being a ratio of a charging current requested by the terminal to a current base; and adjusting the power supply capability based on the field value of the operating voltage field and the field value of the operating current field.

In some exemplary embodiments, adjusting the power supply capability based on the basic charging voltage and the basic charging current includes: determining the operating charging voltage requested by the terminal based on the basic charging voltage; determining the operating charging current requested by the terminal based on the basic charging current; and adjusting the power supply capability based on the operating charging voltage requested by the terminal and the operating charging current requested by the terminal.

In some exemplary embodiments, the operating charging voltage V requested by the terminal is determined by the formula $V = V_2 \times V_{base}$ .

In some exemplary embodiments, the operating charging current I requested by the terminal is determined by the formula $I = I_2 \times I_{base}$ .

In some exemplary embodiments, before receiving the first message sent by the terminal, the method further includes: sending a second message to the terminal; and the second message includes: the first-charging-parameter-base extended value.

In some exemplary embodiments, the second message further includes: the second-charging-parameter-base extended value.

In some exemplary embodiments, the second message is a VDM.

In some exemplary embodiments, the second message includes: the first-voltage-base extended value $k_{V1}$ and/or the first-current-base extended value $k_{I1}$.

In some exemplary embodiments, before sending the second message to the terminal, the method further includes: detecting whether both the charger and the terminal support the fast charging standard protocol and the fast charging extended protocol; and in a case where both the charger and the terminal support the fast charging standard protocol and the fast charging extended protocol, performing the operation of sending the second message to the terminal.

In some exemplary embodiments, after sending the second message to the terminal, the method further includes: detecting whether both the charger and the terminal support the fast charging standard protocol and the fast charging extended protocol; and in a case where both the charger and the terminal support the fast charging standard protocol and the fast charging extended protocol, performing the operation of receiving the first message sent by the terminal.

In some exemplary embodiments, before receiving the first message sent by the terminal, the method further includes: sending a third message to the terminal, with the third message including a third-charging-parameter-base extended value; and receiving a fourth message sent by the terminal, with the fourth message including the first-charging-parameter-base extended value.

In some exemplary embodiments, the third message further includes: a fourth-charging-parameter-base extended value.

In some exemplary embodiments, the fourth message further includes: the second-charging-parameter-base extended value.

In some exemplary embodiments, the third message is a VDM.

In some exemplary embodiments, the fourth message is a VDM.

In some exemplary embodiments, the third message includes: the second-voltage-base extended value $k_{V2}$ and/or the second-current-base extended value $k_{I2}$.

In some exemplary embodiments, the fourth message includes: the first-voltage-base extended value $k_{V1}$ and/or the first-current-base extended value $k_{I1}$.

In some exemplary embodiments, before sending the third message to the terminal, the method further includes: detecting whether the charger and the terminal support the fast charging standard protocol and the fast charging extended protocol; and in a case where both the charger and the terminal support the fast charging standard protocol and the fast charging extended protocol, performing the operation of sending the third message to the terminal.

In some exemplary embodiments, after sending the third message to the terminal, the method further includes: detecting whether the charger and the terminal support the fast charging standard protocol and the fast charging extended protocol; and in a case where both the charger and the terminal support the fast charging standard protocol and the fast charging extended protocol, performing the operation of receiving the fourth message sent by the terminal.

In some exemplary embodiments, before receiving the first message sent by the terminal, the method further includes: sending a fifth message to the terminal; and the fifth message includes: the product of the first charging parameter base and the first-charging-parameter-base extended value.

In some exemplary embodiments, the fifth message further includes: the product of the second charging parameter base and the second-charging-parameter-base extended value.

In some exemplary embodiments, the fifth message is a VDM.

In some exemplary embodiments, the fifth message includes: a product of a voltage base and a voltage-base extended value and/or a product of a current base and a current-base extended value.

In some exemplary embodiments, before sending the fifth message to the terminal, the method further includes: detecting whether the charger and the terminal support the fast charging standard protocol and the fast charging extended protocol; and in a case where both the charger and the terminal support the fast charging standard protocol and the fast charging extended protocol, performing the operation of sending the fifth message to the terminal.

In some exemplary embodiments, after sending the fifth message to the terminal, the method further includes: detecting whether the charger and the terminal support the fast charging standard protocol and the fast charging extended protocol; and in a case where both the charger and the terminal support the fast charging standard protocol and the fast charging extended protocol, performing the operation of receiving the first message sent by the terminal.

In the charging method provided in the embodiments of the present disclosure, a maximum value of the first charging parameter in the fast charging standard protocol is extended, so that a maximum value of the charging power is extended.

In some exemplary embodiments, a maximum value of the second charging parameter in the fast charging standard protocol is also extended, so that the maximum value of the charging power is further extended.

In order to present the implementation processes of the charging methods provided in the embodiments of the present disclosure more completely and directly, several examples are listed below for illustration, but the listed examples are just for ease of illustration and are not intended to limit the scope of the charging methods provided in the embodiments of the present disclosure.

First Example

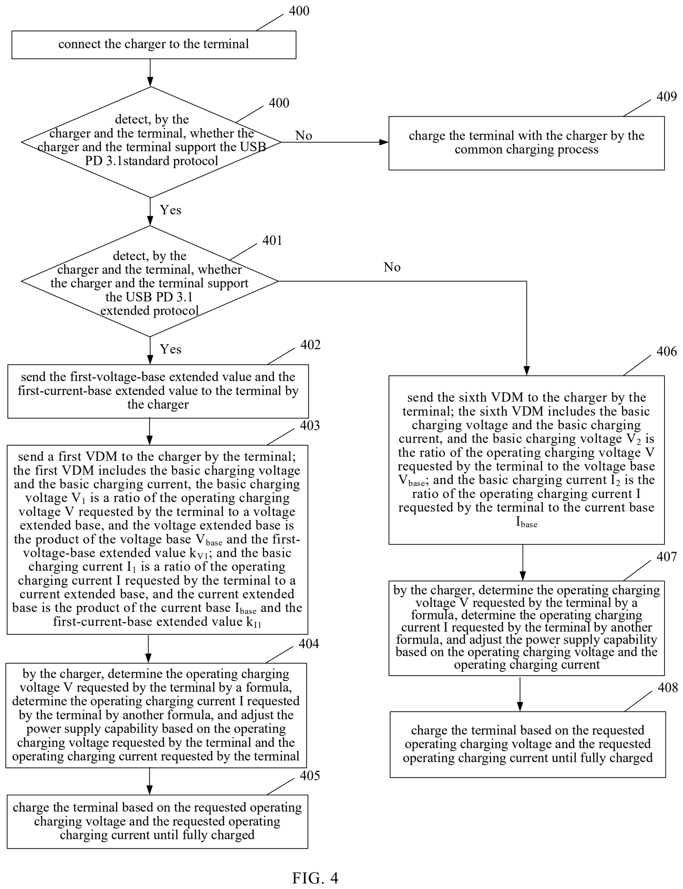

A charging method is illustrated by the present example, and as shown in FIG. 4, the charging method includes operations 400 to 409.

At operation 400, the charger is connected to the terminal, the charger and the terminal detect whether the charger and the terminal support the USB PD 3.1 standard protocol, and operation 401 is then performed in a case where both the charger and the terminal support the USB PD 3.1 standard protocol; and operation 409 is then performed in a case where the charger or the terminal does not support the USB PD 3.1 standard protocol.

At operation 401, the charger and the terminal detect whether the charger and the terminal support the USB PD 3.1 extended protocol, and operations 402 to 405 are then performed in a case where both the charger and the terminal support the USB PD 3.1 extended protocol; and operations 406 and 408 are then performed in a case where the charger or the terminal does not support the USB PD 3.1 extended protocol.

At operation 402, the charger sends the first-voltage-base extended value and the first-current-base extended value to the terminal.

At operation 403, the terminal sends a first VDM to the charger; the first VDM includes the basic charging voltage and the basic charging current, the basic charging voltage $V_1$ is a ratio of the operating charging voltage V requested by the terminal to a voltage extended base, and the voltage extended base is the product of the voltage base $V_{base}$ and the first-voltage-base extended value $k_{V1}$; and the basic charging current $I_1$ is a ratio of the operating charging current I requested by the terminal to a current extended base, and the current extended base is the product of the current base $I_{base}$ and the first-current-base extended value $k_{I1}$.

At operation 404, the charger determines the operating charging voltage V requested by the terminal by the formula $V = V_1 \times k_{V1} \times V_{base}$, determines the operating charging current I requested by the terminal by the formula $I = I_1 \times k_{I1} \times I_{base}$, and adjusts the power supply capability based on the operating charging voltage requested by the terminal and the operating charging current requested by the terminal.

At operation 405, the terminal is charged based on the requested operating charging voltage and the requested operating charging current until fully charged.

At operation 406, the terminal sends the sixth VDM to the charger; the sixth VDM includes the basic charging voltage and the basic charging current, and the basic charging voltage $V_2$ is the ratio of the operating charging voltage V requested by the terminal to the voltage base $V_{base}$; and the basic charging current $I_2$ is the ratio of the operating charging current I requested by the terminal to the current base $I_{base}$.

At operation 407, the charger determines the operating charging voltage V requested by the terminal by the formula $V = V_2 \times V_{base}$, determines the operating charging current I requested by the terminal by the formula $I = I_2 \times I_{base}$, and adjusts the power supply capability based on the operating charging voltage and the operating charging current.

At operation 408, the terminal is charged based on the requested operating charging voltage and the requested operating charging current until fully charged.

At operation 409, the charger charges the terminal by the common charging process.

Second Example

A charging method for the charger supporting the USB PD 3.1 extended protocol and the terminal which does not support the USB PD 3.1 extended protocol but supports the USB PD 3.1 standard protocol is illustrated below by the present example.

The charger is connected to the terminal, the charger sends the first-voltage-base extended value $k_{V1}$ and the first-current-base extended value $k_{I1}$ to the terminal, but the terminal does not respond to the charger because the terminal does not support the USB PD 3.1 extended protocol, so that a USB PD 3.1 standard fast charging process is performed.

The terminal requests that the operating charging voltage V=10.4 V, and needs to write the basic charging voltage $V_1=V/V_{base}=(10.4 \text{ V})/(0.02 \text{ V})=520$ to the sixth VDM; and the voltage base $V_{base}=0.02$ V.

The terminal requests that the operating charging current 1=2.5 A, and needs to write the basic charging current $I_1=I/I_{base}=(2.5 \text{ A})/(0.05 \text{ A})=50$ to the sixth VDM; and the current base $I_{base}=0.05$ A.

The terminal sends the sixth VDM to the charger for requesting the operating charging voltage and the operating charging current.

The charger receives the sixth VDM indicating that the basic charging voltage $V_1$=520 and the basic charging current $I_1$=50 from the terminal, and adjusts the power supply capability to meet that the operating charging voltage $V=V_1\times V_{base}$=10.4 V and the operating charging current $I=I_1\times I_{base}$=2.5 A.

The terminal is charged based on the requested operating charging voltage and the requested operating charging current until fully charged.

Third Example

A charging method for the charger which does not support the USB PD 3.1 standard protocol and the terminal supporting the USB PD 3.1 extended protocol is illustrated below by the present example.

The charger is connected to the terminal, and the charger and the terminal cannot establish communication under the USB PD 3.1 standard protocol, so that the common charging process is performed.

Fourth Example

A charging method for the charger supporting the USB PD 3.1 extended protocol and the terminal supporting the USB PD 3.1 extended protocol is illustrated below by the present example.

The charger is connected to the terminal, the charger sends the first-voltage-base extended value $k_{V1}$ and the first-current-base extended value $k_{I1}$ to the terminal, the terminal responds to the charger, and a USB PD 3.1 extended fast charging process is performed.

The terminal requests that the operating charging voltage V=20 V, and needs to write the basic charging voltage $V_1=V/(k_{V1}\times V_{base})$=(20 V)/(2×0.02 V)=500 to the first VDM; and the voltage base $V_{base}$=0.02 V, and the first-voltage-base extended value $k_{V1}$=2.

The terminal requests that the operating charging current I=6 A, and needs to write the basic charging current $I_1=I/(k_{I1}\times I_{base})$=(6 A)/(4×0.05 A)=30 to the first VDM; and the current base $I_{base}$=0.05 A, and the first-current-base extended value $k_{I1}$=4.

The terminal sends the first VDM to the charger for requesting the operating charging voltage and the operating charging current.

The charger receives the first VDM indicating that the basic charging voltage $V_1$=500 and the basic charging current $I_1$=30 from the terminal, and adjusts the power supply capability to meet that the operating charging voltage $V=V_1\times k_{I1}\times V_{base}$=20 V and the operating charging current $I=I_1\times k_{I1}\times I_{base}$=6 A.

The terminal is charged based on the requested operating charging voltage and the requested operating charging current until fully charged.

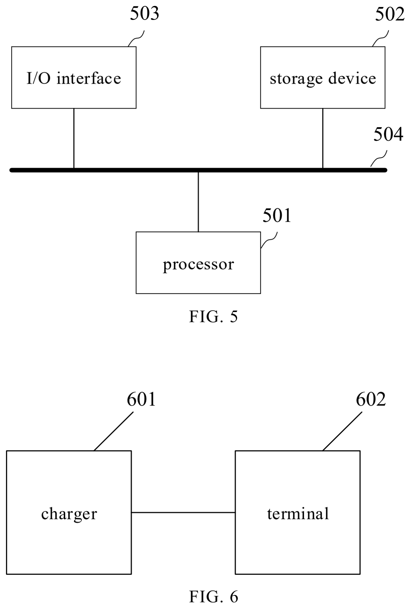

In a third aspect, referring to FIG. 5, another embodiment of the present disclosure provides an electronic device, including: at least one processor 501; and a storage device 502 having stored thereon at least one program which, when executed by the at least one processor 501, implements the charging method described in any of the above embodiments in the present disclosure.

In some exemplary embodiments, the electronic device may further include: one or more Input/output (I/O) interfaces 503 connected between the at least one processor 501 and the storage device 502 and configured to enable information interaction between the at least one processor 501 and the storage device 502.

The processor 501 is a device having a data processing capability, and includes, but is not limited to, a Central Processing Unit (CPU); the storage device 502 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 503 is connected between the processor 501 and the storage device 502, is capable of enabling the information interaction between the processor 501 and the storage device 502, and includes, but is not limited to, a data bus (Bus).

In some embodiments, the processor 501, the storage device 502, and the I/O interface 503 are connected to each other through a bus 504, and then are connected to other components of a computing device.

In a fourth aspect of the present disclosure, another embodiment of the present disclosure provides a computer-readable medium having stored thereon a computer program which, when executed by a processor, implements the charging method described in any of the above embodiments in the present disclosure.

FIG. 6 is a block diagram of a charging system according to another embodiment of the present disclosure.

In a fifth aspect, referring to FIG. 6, another embodiment of the present disclosure provides a charging system, including: a charger 601 and a terminal 602.

In some exemplary embodiments, the terminal 602 is configured to send a first message to the charger; the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold. The terminal 602 is configured to be charged based on the requested first operating charging parameter and the requested second operating charging parameter until fully charged.

The charger 601 is configured to receive the first message sent by the terminal; the first message includes the first basic charging parameter and the second basic charging parameter, and the first basic charging parameter is determined based on the first operating charging parameter requested by the terminal; the second basic charging parameter is determined based on the second operating charging parameter requested by the terminal; and the maximum value of the first operating charging parameter is greater than the first preset threshold, and/or the maximum value of the second operating charging parameter is greater than the second preset threshold. The charger 601 is configured to adjust a power supply capability based on the first basic charging parameter and the second basic charging parameter.

In some exemplary embodiments, the terminal 602 is further configured to: detect whether the charger and the terminal support a fast charging standard protocol and a fast charging extended protocol; and in a case where both the charger and the terminal support the fast charging standard protocol and the fast charging extended protocol, perform the operation of sending the first message to the charger.

The charger 601 is further configured to: detect whether the charger and the terminal support the fast charging standard protocol and the fast charging extended protocol; and in a case where both the charger and the terminal support the fast charging standard protocol and the fast charging extended protocol, perform the operation of receiving the first message sent by the terminal.

In some exemplary embodiments, the terminal 602 is further configured to receive a second message sent by the charger; and the second message includes: a first-charging-parameter-base extended value.

The charger 601 is further configured to send the second message to the terminal; and the second message includes: the first-charging-parameter-base extended value.

In some exemplary embodiments, the terminal 602 is further configured to: receive a third message sent by the charger, with the third message including a third-charging-parameter-base extended value; determine the first-charging-parameter-base extended value based on the third-charging-parameter-base extended value, with the first-charging-parameter-base extended value being less than or equal to the third-charging-parameter-base extended value; and send a fourth message to the charger, with the fourth message including the first-charging-parameter-base extended value.

The charger 601 is further configured to send the third message to the terminal, with the third message including the third-charging-parameter-base extended value; and receive the fourth message sent by the terminal, with the fourth message including the first-charging-parameter-base extended value.

In some exemplary embodiments, the terminal 602 is further configured to receive a fifth message sent by the charger; and the fifth message includes: a product of a first charging parameter base and the first-charging-parameter-base extended value.

The charger 601 is further configured to send the fifth message to the terminal; and the fifth message includes: the product of the first charging parameter base and the first-charging-parameter-base extended value.

In some exemplary embodiments, the charger 601 is configured to performing the operation of adjusting the power supply capability based on the first basic charging parameter and the second basic charging parameter in the following way: determining the first operating charging parameter requested by the terminal based on the first basic charging parameter; determining the second operating charging parameter requested by the terminal based on the second basic charging parameter; and adjusting the power supply capability based on the first operating charging parameter requested by the terminal and the second operating charging parameter requested by the terminal.

An implementation process of the charging system is the same as those of the charging methods described in the above embodiments, and thus will not be repeated herein.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A charging method, comprising:

   sending a first message to a charger; wherein the first message comprises a first basic charging parameter and a second basic charging parameter, the first basic charging parameter is determined based on a first operating charging parameter requested by a terminal, and the second basic charging parameter is determined based on a second operating charging parameter requested by the terminal; and a maximum value of the first operating charging parameter is greater than a first preset threshold, and/or a maximum value of the second operating charging parameter is greater than a second preset threshold; and
   performing charging based on the first operating charging parameter and the second operating charging parameter until the terminal is fully charged.

2. The charging method of claim 1, wherein before sending the first message to the charger, the method further comprises:

   detecting whether the charger and the terminal support a fast charging standard protocol and a fast charging extended protocol; and
   in a case where both the charger and the terminal support the fast charging standard protocol and the fast charging extended protocol, performing the operation of sending the first message to the charger.

3. The charging method of claim 1 or 2, wherein the first basic charging parameter is a ratio of the first operating charging parameter to a product of a first charging parameter base and a first-charging-parameter-base extended value; and/or
   the second basic charging parameter is a ratio of the second operating charging parameter to a product of a second charging parameter base and a second-charging-parameter-base extended value.

4. The charging method of claim 3, wherein before sending the first message to the charger, the method further comprises:

   receiving a second message sent by the charger; wherein the second message comprises: the first-charging-parameter-base extended value; or
   receiving a third message sent by the charger, wherein the third message comprises a third-charging-parameter-base extended value; determining the first-charging-parameter-base extended value based on the third-charging-parameter-base extended value, wherein the first-charging-parameter-base extended value is less than or equal to the third-charging-parameter-base extended value; and sending a fourth message to the charger, wherein the fourth message comprises the first-charging-parameter-base extended value; or
   receiving a fifth message sent by the charger; wherein the fifth message includes: the product of the first charging parameter base and the first-charging-parameter-base extended value.

5. The charging method of claim 1 or 2, wherein the first basic charging parameter is a basic charging voltage, the first operating charging parameter is an operating charging voltage, the second basic charging parameter is a basic charging current, and the second operating charging parameter is an operating charging current.

6. A charging method, comprising:

   receiving a first message sent by a terminal; wherein the first message comprises a first basic charging parameter and a second basic charging parameter, the first basic charging parameter is determined based on a first operating charging parameter requested by the terminal, and the second basic charging parameter is determined based on a second operating charging parameter requested by the terminal; and a maximum value of the first operating charging parameter is greater than a first preset threshold, and/or a maximum value of the second operating charging parameter is greater than a second preset threshold; and
adjusting a power supply capability based on the first basic charging parameter and the second basic charging parameter.

7. The charging method of claim 6, wherein before receiving the first message sent by the terminal, the method further comprises:

detecting whether a charger and the terminal support a fast charging standard protocol and a fast charging extended protocol; and
in a case where both the charger and the terminal support the fast charging standard protocol and the fast charging extended protocol, performing the operation of receiving the first message sent by the terminal.

8. The charging method of claim 6 or 7, wherein the first basic charging parameter is a ratio of the first operating charging parameter to a product of a first charging parameter base and a first-charging-parameter-base extended value; and/or
the second basic charging parameter is a ratio of the second operating charging parameter to a product of a second charging parameter base and a second-charging-parameter-base extended value.

9. The charging method of claim 8, wherein before receiving the first message sent by the terminal, the method further comprises:

sending a second message to the terminal; wherein the second message comprises: the first-charging-parameter-base extended value; or
sending a third message to the terminal, wherein the third message comprises a third-charging-parameter-base extended value; and receiving a fourth message sent by the terminal, wherein the fourth message comprises the first-charging-parameter-base extended value; or
sending a fifth message to the terminal; wherein the fifth message includes: the product of the first charging parameter base and the first-charging-parameter-base extended value.

10. The charging method of claim 6 or 7, wherein adjusting the power supply capability based on the first basic charging parameter and the second basic charging parameter comprises:

determining the first operating charging parameter based on the first basic charging parameter;
determining the second operating charging parameter based on the second basic charging parameter; and

adjusting the power supply capability based on the first operating charging parameter and the second operating charging parameter.

11. An electronic device, comprising:

at least one processor; and
a storage device having stored thereon at least one program which, when executed by the at least one processor, implements the charging method of any one of claims 1 to 10.

12. A computer-readable medium having stored thereon a computer program which, when executed by a processor, implements the charging method of any one of claims 1 to 10.

power supply    charger head    terminal    charging cable

FIG. 1

200

send a first message to a charger; the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold

201

perform charging based on the first operating charging parameter and the second operating charging parameter until the terminal is fully charged

FIG. 2

300

receive a first message sent by a terminal; the first message includes a first basic charging parameter and a second basic charging parameter, and the first basic charging parameter is determined based on a first operating charging parameter requested by the terminal; the second basic charging parameter is determined based on a second operating charging parameter requested by the terminal; and a maximum value of the first operating charging parameter is greater than a first preset threshold, and/or a maximum value of the second operating charging parameter is greater than a second preset threshold

301

adjust a power supply capability based on the first basic charging parameter and the second basic charging parameter

FIG. 3

connect the charger to the terminal — 400

detect, by the charger and the terminal, whether the charger and the terminal support the USB PD 3.1 standard protocol — 400

No → charge the terminal with the charger by the common charging process — 409

Yes ↓

detect, by the charger and the terminal, whether the charger and the terminal support the USB PD 3.1 extended protocol — 401

No →

send the sixth VDM to the charger by the terminal; the sixth VDM includes the basic charging voltage and the basic charging current, and the basic charging voltage $V_2$ is the ratio of the operating charging voltage V requested by the terminal to the voltage base $V_{base}$; and the basic charging current $I_2$ is the ratio of the operating charging current I requested by the terminal to the current base $I_{base}$ — 406

by the charger, determine the operating charging voltage V requested by the terminal by a formula, determine the operating charging current I requested by the terminal by another formula, and adjust the power supply capability based on the operating charging voltage and the operating charging current — 407

charge the terminal based on the requested operating charging voltage and the requested operating charging current until fully charged — 408

Yes ↓

send the first-voltage-base extended value and the first-current-base extended value to the terminal by the charger — 402

send a first VDM to the charger by the terminal; the first VDM includes the basic charging voltage and the basic charging current, the basic charging voltage $V_1$ is a ratio of the operating charging voltage V requested by the terminal to a voltage extended base, and the voltage extended base is the product of the voltage base $V_{base}$ and the first-voltage-base extended value $k_{V1}$; and the basic charging current $I_1$ is a ratio of the operating charging current I requested by the terminal to a current extended base, and the current extended base is the product of the current base $I_{base}$ and the first-current-base extended value $k_{I1}$ — 403

by the charger, determine the operating charging voltage V requested by the terminal by a formula, determine the operating charging current I requested by the terminal by another formula, and adjust the power supply capability based on the operating charging voltage requested by the terminal and the operating charging current requested by the terminal — 404

charge the terminal based on the requested operating charging voltage and the requested operating charging current until fully charged — 405

FIG. 4

503

502

I/O interface

storage device

504

processor

501

FIG. 5

601

602

charger

terminal

FIG. 6

## INTERNATIONAL SEARCH REPORT

| International application No. |
| --- |
| **PCT/CN2024/080466** |

### A. CLASSIFICATION OF SUBJECT MATTER

H02J7/00(2006.01)i

According to International Patent Classification (IPC) or to both national classification and IPC

### B. FIELDS SEARCHED

Minimum documentation searched (classification system followed by classification symbols)

IPC:H02J7/-

Documentation searched other than minimum documentation to the extent that such documents are included in the fields searched

Electronic data base consulted during the international search (name of data base and, where practicable, search terms used)

CNTXT, ENTXT, ENTXTC, VEN, WPABSC, IEEE, CNKI: 倍, 比, 比值, 标准, 参数, 充电, 充电器, 电流, 电压, 对应, 发送, 工作, 基础, 基数, 接收, 快充, 快速充电, 扩充, 扩展, 拓展, 消息, 信号, 指令, fast, VDM, correspond+, current+, send+, receiv +, charg+, charger+, voltage+, signal+, command+.

### C. DOCUMENTS CONSIDERED TO BE RELEVANT

| Category* | Citation of document, with indication, where appropriate, of the relevant passages | Relevant to claim No. |
| --- | --- | --- |
| X | CN 107231012 A (HUAWEI TECHNOLOGIES CO., LTD.) 03 October 2017 (2017-10-03) description, paragraphs 62-150, and figures 1-9 | 1-2, 5-7, 10-12 |
| A | CN 110460130 A (BEIJING BYTEDANCE NETWORK TECHNOLOGY CO., LTD.) 15 November 2019 (2019-11-15) entire document | 1-12 |
| A | CN 114744693 A (LENOVO (BEIJING) CO., LTD.) 12 July 2022 (2022-07-12) entire document | 1-12 |
| A | US 2019245362 A1 (HUAWEI TECHNOLOGIES CO., LTD.) 08 August 2019 (2019-08-08) entire document | 1-12 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 April 2024** | **04 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2024/080466** |

| Patent document cited in search report | | | Publication date (day/month/year) | Patent family member(s) | | | Publication date (day/month/year) |
| --- | --- | --- | --- | --- | --- | --- | --- |
| CN | 107231012 | A | 03 October 2017 | US | 2019036354 | A1 | 31 January 2019 |
| | | | | US | 10734830 | B2 | 04 August 2020 |
| | | | | KR | 20180118786 | A | 31 October 2018 |
| | | | | KR | 102220839 | B1 | 25 February 2021 |
| | | | | DE | 202017007596 | U1 | 13 June 2023 |
| | | | | WO | 2017173937 | A1 | 12 October 2017 |
| | | | | JP | 2019511197 | A | 18 April 2019 |
| | | | | JP | 6669931 | B2 | 18 March 2020 |
| | | | | EP | 4207552 | A1 | 05 July 2023 |
| | | | | ES | 2951335 | T3 | 19 October 2023 |
| | | | | US | 2023155392 | A1 | 18 May 2023 |
| | | | | ES | 2793473 | T3 | 16 November 2020 |
| | | | | EP | 3654487 | A1 | 20 May 2020 |
| | | | | EP | 3654487 | B1 | 03 May 2023 |
| | | | | EP | 3435511 | A4 | 30 January 2019 |
| | | | | EP | 3435511 | A1 | 04 March 2020 |
| | | | | US | 2020343756 | A1 | 29 October 2020 |
| | | | | US | 11581745 | B2 | 14 February 2023 |
| | | | | CN | 107231012 | B | 24 May 2019 |
| | | | | JP | 2019511197 | W | 18 April 2019 |
| | | | | EP | 3435511 | B1 | 04 March 2020 |
| CN | 110460130 | A | 15 November 2019 | CN | 110460130 | B | 21 June 2022 |
| CN | 114744693 | A | 12 July 2022 | | None | | |
| US | 2019245362 | A1 | 08 August 2019 | WO | 2018039881 | A1 | 08 March 2018 |
| | | | | CN | 109565171 | A | 02 April 2019 |
| | | | | EP | 3503332 | A1 | 26 June 2019 |
| | | | | EP | 3503332 | A4 | 21 August 2019 |
| | | | | CN | 109565171 | B | 07 August 2020 |
| | | | | US | 11476684 | B2 | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310454931